Europäisches Patentamt

European Patent Office

Office européen des brevets

(11) Veröffentlichungsnummer: **0 439 009 A1**

# (12) EUROPÄISCHE PATENTANMELDUNG

(21) Anmeldenummer: **91100104.8**

(22) Anmeldetag: **02.01.91**

(51) Int. Cl.5: **B41M 5/24**, B23K 26/18, B44C 3/00, B27M 1/00

(30) Priorität: **24.01.90 DE 4002039**

(43) Veröffentlichungstag der Anmeldung:
**31.07.91 Patentblatt 91/31**

(84) Benannte Vertragsstaaten:
**AT BE CH DE DK ES FR GB GR IT LI LU NL SE**

(71) Anmelder: **ERPE - Ernst Pelz - Vertriebs GmbH + Co. - Verwaltungs KG Industriestrasse 43 W-8581 Vorbach/Opf.(DE)**

(72) Erfinder: **Pelz, Peter Dieselweg 10 W-8192 Geretsried 2/Opf.(DE)**

(74) Vertreter: **Goddar, Heinz J., Dr. et al FORRESTER & BOEHMERT Widenmayerstrasse 4/I W-8000 München 22(DE)**

(54) **Verfahren zum materialabhebenden Bearbeiten von Holzwerkstücken oder dergleichen sowie danach hergestelltes Holzwerkstück.**

(57) Verfahren zum materialabhebenden Bearbeiten von HolzWerkstücken, wie plattenförmigen Massiv-, Schicht- oder Furnierteilen oder dergleichen, bei dem ein erstes Teil des Werkstücks mittels einer Bearbeitungseinrichtung von einem zweiten Teil abgetrennt wird, beispielsweise durch Zuschneiden, Ausschneiden oder bereichsweises Entfernen von Oberflächenschichten oder dergleichen, dadurch gekennzeichnet, daß zum materialabhebenden Bearbeiten eine Lasereinrichtung verwendet wird, sowie danach hergestelltes Werkstück.

# Fig.3

## VERFAHREN ZUM MATERIALABHEBENDEN BEARBEITEN VON HOLZWERKSTÜCKEN ODER DERGLEICHEN SOWIE DANACH HERGESTELLTES HOLZWERKSTÜCK

Die Erfindung betrifft ein Verfahren zum materialabhebenden Bearbeiten von Holzwerkstücken, wie plattenförmigen Massiv-, Schicht- oder Furnierteilen oder dergleichen, bei dem ein erstes Teil des Werkstücks mittels einer Bearbeitungseinrichtung von einem zweiten Teil abgetrennt wird, beispielsweise durch Zuschneiden, Ausschneiden oder bereichsweises Entfernen von Oberflächenschichten oder dergleichen, sowie ein danach hergestelltes Holzwerkstück.

Bei bekannten Verfahren der vorstehend beschriebenen Art werden bislang Schneideinrichtungen in der Form von Messern oder Sägen verwendet, soweit es sich um das Zuschneiden von Holzwerkstücken oder beispielsweise auch Furnierwerkstücken der z. B. in der DE-PS 36 36 587 beschriebenen Art handelt, ferner auch Fräseinrichtungen, wenn z. B. eine designartige Bearbeitung von Oberflächen durch bereichsweises Abtragen von Material zwecks Herstellung eines Musters vorgesehen ist. Derartige Schneid-, Säge- oder Fräsverfahren haben den Nachteil, daß sie insbesondere bei verhältnismäßig komplizierter Formgebung schwierig und kostenaufwendig in der Durchführung sind, ferner auch, daß in aller Regel zur Erzielung einer ästhetisch ansprechenden Oberfläche des fertigen Holzwerkstückes eine Nachbearbeitung in Form von Hobeln, Raspeln, Polieren oder dergleichen notwendig ist.

Es ist bereits versucht worden, Schwierigkeiten der vorstehend beschriebenen Art dadurch zu begegnen, daß in der in der DE-PS 36 36 587 beschriebenen Weise Furnierwerkstücke mittels eines Preßstanzvorganges hergestellt werden, bei dem beispielsweise beim Herstellen von Ausschnitten in einem einzigen Arbeitsgang, nämlich dem Preßstanzvorgang, das Bilden des Ausschnittes und das Furnieren der Umfangswandlung, dadurch insgesamt die Oberflächenbearbeitung, gleichzeitig bewerkstelligt werden, jedoch ist der Einsatzbereich auch dieses Verfahrens begrenzt, wobei die Notwendigkeit eines Nacharbeitens nicht immer vermieden werden kann.

Der Erfindung liegt die Aufgabe zugrunde, ein verfahren der gattungsgemäßen Art zu schaffen, welches mit geringen Kosten die materialabhebende Bearbeitung von Holzwerkstücken, z. B. durch Einbringung von Bohrungen oder Durchbrüchen, aber auch für Randbearbeitungen und dergleichen, in hoher, ein Nacharbeiten weitestgehend erübrigender Oberflächenqualität ermöglicht; dabei sollen nicht nur Vollhölzer, sondern beispielsweise auch geschichtete Lagenhölzer oder Furnierwerkstücke sowie Fasermatten-Formpreß-und Kunststoffteile bearbeitbar sein. Innerhalb der Aufgabe der Erfindung liegt es auch, ein mit dem erfindungsgemäßen Verfahren herstellbares Holzwerkstück oder dergleichen zu schaffen.

Erfindungsgemäß wird diese Aufgabe bei einem Verfahren der gattungsgemäßen Art dadurch gelöst, daß zum materialabhebenden Bearbeiten eine Lasereinrichtung verwendet wird.

Dabei kann vorgesehen sein, daß eine Lasereinrichtung mit variabler Strahlenergie verwendet wird.

Erfindungsgemäß kann auch vorgesehen sein, daß in das Werkstück Liniaturen oder dergleichen eingebracht werden.

Die Erfindung schlägt ferner vor, daß die Liniaturen in Form von Linien, Schriftzügen oder bildlichen Symboldarstellungen eingebracht werden.

Nach der Erfindung kann auch so vorgegangen werden, daß die Liniaturen das Werkstück ausschnittförmig durchsetzend eingebracht werden.

Eine weitere Ausführungsform der Erfindung ist dadurch gekennzeichnet, daß die Liniaturen von der dem Betrachter abgewandten Rückfläche des Werkstücks aus beleuchtbar ausgebildet werden.

Dabei kann vorgesehen sein, daß an der Rückfläche der Liniaturen Leuchtdioden oder dergleichen angeordnet werden.

Die Erfindung schlägt auch vor, daß die Liniaturen als das Werkstück nicht durchsetzende Vertiefungen, wie Nuten oder dergleichen, eingebracht werden.

Dabei kann so vorgegangen werden, daß in das vorzugsweise schichtförmig aufgebrachte Werkstück eine die Tiefe der Vertiefungen begrenzende laserlichtreflektierende Schicht eingebettet wird.

In weiterer Ausführung der Erfindung kann dabei so vorgegangen werden, daß als laserreflektierende Schicht eine Metallfolie, wie Aluminiumfolie, verwendet wird.

Die Erfindung sieht gegebenenfalls auch vor, daß die Liniaturen zur Erzeugung von Inkrustationen mittels eines von dem Werkstückmaterial verschiedenen Materials, ggf. farbig oder metallisch, ausgefüllt werden.

Dabei kann vorgesehen sein, daß in den Liniaturen pilzförmig sich über die dem Betrachter zugewandte Vorderfläche des Werkstüks erhebende Ausstattungselemente verankert werden.

Ferner kann nach den erfindungsgemäßen Verfahren so vorgegangen werden, daß in das Werkstück nach dem Schnittvorgang wieder einsetzbare bewegliche Bedienungsfelder oder dergleichen eingeschnitten werden.

Gegenstand der Erfindung ist auch ein Holzwerkstück oder dergleichen, hergestellt nach dem erfindungsgemäßen Verfahren in seinen verschiedenen Ausführungsformen.

Der Erfindung liegt die überraschende Erkenntnis zugrunde. daß es gelingt, eine große Anzahl der beim Stand der Technik auftretenden Probleme sowohl technischer Art als auch ästhetischer Natur zu lösen, indem statt der bislang vorgesehenen mechanischen Bearbeitungsverfahren eine Laser-Einrichtung eingesetzt wird, wie sie beispielsweise aus der DE-OS 33 14 959 oder der EP-OS 0 164 564 als Schneideinrichtung für andere Materialien bekannt ist. Durch die Verwendung eines Laserstrahls, vorzugsweise eines solchen mit für die Lösung der der Erfindung zugrundeliegenden Aufgabe einstellbarer Strahlenergie, gelingt es nicht nur, sehr schnell die gewünschten materialabhebenden Bearbeitungsvorgänge zu bewerkstelligen, sondern darüber hinaus gleichzeitig auch eine völlig glatte, zur Oberflächenbehandlung geeignete und ggf. versiegelbare Oberfläche herzustellen. Dies alles erfolgt unter Ausnutzung der vielfältig wandelbaren Eigenschaften des Laserstrahls, von denen im Bereich der medizinischen Operationstechnik, um ein Beispiel zu nennen, bereits seit längerem Gebrauch gemacht wird.

Für das erfindungsgemäße Verfahren ist es von Bedeutung, daß durch das oberflächliche Verkohlen der Oberfläche des Holzes das Holz gleichzeitig bereits unter Schließung seiner Fasern verschlossen und gleichsam "poliert" wird, woraus sich eine hohe Feuchtigkeitsundurchlässigkeit ergibt. Diese kann einmal von Vorteil sein, wenn z. B. die Innenkantenflächen von Ausschnitten oder dergleichen lackiert werden sollen. Der weitere Vorteil besteht aber darin, daß auf eine derartige Lackierung vollständig verzichtet werden kann und beispielsweise bereits in gewünschter Weise durch die Verkohlung schwarz gefärbte, darüber hinaus flüssigkeitsdichte Innenflächen der Ausschnitte etc. erhalten werden. Von besonderer Bedeutung ist dies, wenn z. B. ein Ausgießen der Ausschnitte mit z. B. Polymethylmethacrylat oder anderen Kunststoffen beabsichtigt ist, da dann die Ausschnitte ohne weitere Schutzmaßnahmen als verlorene Form für den entsprechenden Gießvorgang verwendet werden können.

Wenn, wie es bei dem bevorzugten Ausführungsbeispiel der Erfindung vorgesehen ist, in das Holzwerkstück, in diesem Fall vorzugsweise als Lagenholz ausgebildet, eine reflektierende Metallfolie, z. B. eine Aluminiumfolie, eingebettet wird, gelingt es nicht nur, die Tiefe von Oberflächenvertiefungen etc., z. B. Nuten, auf einfachste weise zu begrenzen, indem der Laserstrahl an der betreffenden Schicht reflektiert wird, sondern gleichzeitig läßt sich auch bei entsprechender Materialauswahl die Formstabilität des Werkstückes erhöhen.

Werden in Ausschnitte, Liniaturen und dergleichen beispielsweise transparente Kunststoffstücke, z. B. aus Polymethylmethacrylat bestehend, eingesetzt, so lassen sich diese von der Rückseite her beleuchten, woraus vielfältige Möglichkeiten bei der Herstellung von Turnmöbeln, Videomöbeln oder auch von Armaturen und dergleichen für Kraftfahrzeuge, jedoch auch von Uhrenzifferblättern etc., entstehen.

Ein besonderer Vorteil des Verfahrens nach der Erfindung liegt darin, daß Ausschnitte mit rechtwinkligen Begrenzungen auch in sehr schmaler Form hergestellt werden können, eine Vorgehensweise, die bei Fräsverfahren unmöglich ist, weil hier stets die Rundung des Fräsers berücksichtigt werden muß. Rechtwinklige Begrenzungen von Ausschnitten lassen sich daher bei den bekannten Fräsverfahren nur durch Nacharbeiten, mittels Feilens oder dergleichen, erzielen, während beim erfindungsgemäßen Verfahren hierfür kein weiterer Arbeitsgang notwendig ist.

Bei dem erfindungsgemäßen Verfahren besteht auch die Möglichkeit, in der beanspruchten Weise z. B. "Einfräsungen", hier natürlich ausschließlich mittels Laserstrahltechnik hergestellt, zur Aufnahme von sogenannten Adern in Form Nuten oder in flächiger, bildähnlicher Form aus Metall, farbigen Furnieren, Kunststoffen, Elfenbein und dergleichen) in der Art vorzusehen, wie sie als Boullé-Technik von den französischen Ebonisten des 18. Jahrhunderts in Holz eingearbeitet wurden. Damit können mit Hilfe der erfindungsgemäßen Lasertechnik sowohl haarfeine, mit Schneidwerkzeugen herkömmlicher Art nicht herstellbare Liniaturen punktförmiger oder flächiger Inkrustationen mit Einlagerung geeigneter z. B. farbiger Kunststoffe oder aus anderem Material für Schriftzüge, Schmuck- und Informationsdarstellungen eingebracht werden, als es auch ferner möglich ist, für das Einbringen der betreffenden Einlagerungen nicht nur feste Stoffe zu verwenden, sondern die entsprechenden Ausschnitte oder dergleichen mit Materialien nasser, feuchter oder trockener Beschaffenheit, ggf. härtbar, einzureiben, einzuwischen oder auszuspritzen.

Es ist bei der Erfindung auch möglich, Punkte, Adern oder ähnliche Inkrustationen fester Natur mit pilzförmigem Querschnitt mit einem entsprechenden Steg in einer diesbezüglich Nut zu verankern, wobei dann das über die Ansichtsfläche hinausragende, pilzförmig sich vorwölbende Teil dem sichtbaren Informations- bzw. Dekorationszweck dient.

Weitere Merkmale und Vorteile der Erfindung ergeben sich aus der nachstehenden Beschreibung, in der Ausführungsbeispiele anhand der Zeichnung im einzelnen erläutert sind. Dabei zeigt:

Fig. 1    ein erstes Ausführungsbeispiel eines
          nach dem Verfahren nach der Erfindung hergestellten Holzwerkstückes im Schnitt senkrecht zur Werktückfläche;

Fig. 2 ein anderes Ausführungsbeispiel eines nach dem erfindungsgemäßen Verfahren herstellbaren Holzwerkstückes; und

Fig. 3 ein wiederum abgewandeltes Ausführungsbeispieles eines nach dem erfindungsgemäßen Verfahren herstellbaren Holzwerkstückes.

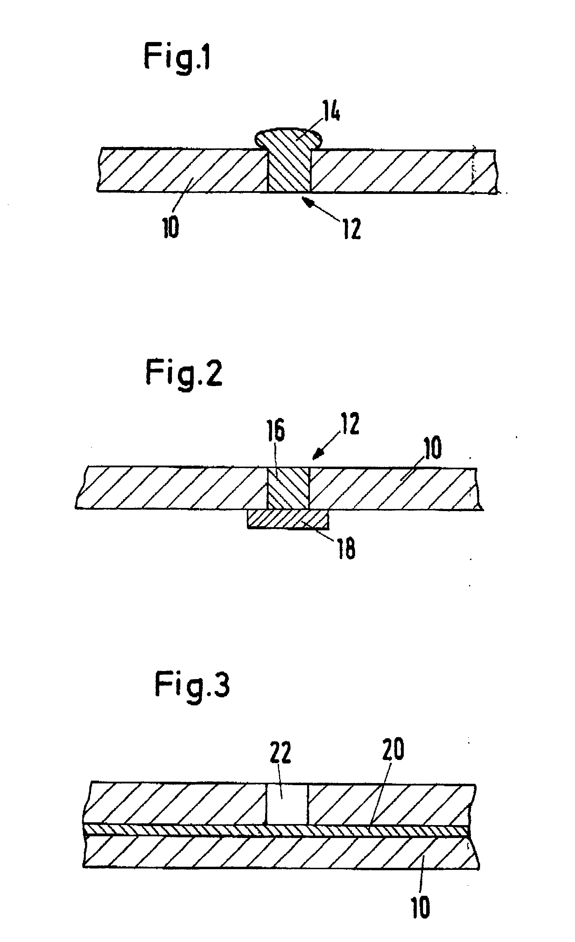

Wie aus Fig. 1 hervorgeht, ist bei dem dort gezeigten Ausführungsbeispiel in ein Holzwerkstück 10, plattenförmig ausgebildet, ein durchgehende Ausschnitt 12 eingebracht, in dem ein pilzförmig sich über die in Fig. 1 oben liegende Ansichtsfläche des Werkstückes sich vorwölbende Ausstattungselement 14 verankert ist.

Beim Ausführungsbeispiel von Fig. 2 ist in den auch hier das Holzwerkstück 10 durchsetzenden Ausschnitt 12, der ebenso wie in Fig. 1 mit Hilfe der Laserstrahltechnik hergestellt ist, ein "Stopfen" 16 aus transparentem Polymethylmethacrylat 14 eingesetzt. Rückseitig ist an der Position des transparenten "Stopfens" 16 eine Leuchtdiode 18 angeordnet. Durch entsprechende Beleuchtung kann von der auch in Fig. 2 oben liegenden Ansichtsfläche aus ein durch den transparenten "Stopfen" 16 bzw. eine diesbezügliche Liniatur, die über die schematische Abbildung von Fig. 2 hinausgeht, symbolisierte Information sichtbar gemacht werden.

Beim Ausführungsbeispiel von Fig. 3 ist das Holzwerkstück 10 schichtförmig aufgebaut und weist eine durchgehende laserstrahlreflektierende Aluminiumfolie 20 auf. Von der in Fig. 3 oben liegenden Seite ist mittels eines Laserstrahls in den oberhalb der Aluminiumfolie 20 liegenden Teil des Holzwerkstückes eine Vertiefung 22 eingebracht, die durch die Aluminiumfolie 20 nach unten begrenzt wird.

Mittels des Verfahrens nach der Erfindung, wie es bei den Ausführungsbeispielen gemäß der Fig. 1 bis 3 angewendet wird, lassen sich allein mit der Laserstrahltechnik ohne weitere zusätzliche Mittel Schriftzüge, Zeichen oder anderes in Flächen aus Holz, Kunststoffen oder anderes Material einbringen. Mit Hilfe der Laserstrahltechnik eingebrachte Inkrustationen in linearer oder flächiger Form können sowohl technischen als auch ästhetischen Aufgaben dienen. Die in der Flächenebene oder über diese herausragend angebrachten Linien, Schriftzüge oder bildlichen Darstellungen können ein- oder mehrfarbig, metallisch oder auch leuchtend, ggf. auch transparent, ausgebildet sein.

Die in der vorstehenden Beschreibung und in den Ansprüchen offenbarten Merkmale der Erfindung können sowohl einzeln als auch in beliebiger Kombination für die Verwirklichung der Erfindung in ihren verschiedenen Ausführungsformen wesentlich sein.

The features disclosed in the foregoing description, in the claims and/or in the accompanying drawings may, both, separately and in any combination thereof, be material for realising the invention in diverse forms thereof.

Holzwerkstück
10
Ausschnitt
12
Ausstattungselement
14
"Stopfen"
16
Leuchtdiode
18
Aliniumfolie
20
Vertiefung
22

**Patentansprüche**

1. verfahren zum materialabhebenden Bearbeiten von Holzwerkstücken, wie plattenförmigen Massiv-, Schicht- oder Furnierteilen, bei dem ein erstes Teil des Werkstücks mittels einer materialabhebenden Lasereinrichtung von einem zweiten Teil abgetrennt wird, beispielsweise durch Zuschneiden, Ausschneiden oder bereichsweises Entfernen von Oberflächenschichten, dadurch gekennzeichnet, daß in das Werkstück Liniaturen oder dergleichen, vorzugsweise in Form von Linien, Schriftzügen oder bildlichen Symboldarstellungen, als das Werkstück nicht durchsetzende Vertiefungen, wie Nuten oder dergleichen, eingebracht werden, wobei in das schichtförmig aufgebaute Werkstück eine die Tiefe der Vertiefungen begrenzende laserlichtreflektierende Schicht in Form einer Metallfolie, insbesondere Aluminiumfolie, eingebettet wird.

2. Verfahren nach Anspruch 1, dadurch gekennzeichnet, daß eine Lasereinrichtung mit variabler Strahlenergie verwendet wird.

3. Verfahren nach Anspruch 1 oder 2, dadurch gekennzeichnet, daß in das Werkstück Liniaturen oder dergleichen eingebracht werden.

4. Verfahren nach Anspruch 3, dadurch gekennzeichnet, daß die Liniaturen in Form von Linien, Schriftzügen oder bildlichen Symboldarstellungen eingebracht werden.

5. Verfahren nach Anspruch 3 oder 4, dadurch gekennzeichnet, daß die Liniaturen das Werkstück ausschnittförmig durchsetzend eingebracht werden.

6. Verfahren nach Anspruch 5, dadurch gekennzeichnet, daß die Liniaturen von der dem Betrachter abgewandten Rückfläche des Werkstücks aus beleuchtbar ausgebildet werden.

7. Verfahren nach Anspruch 6, dadurch gekennzeicht, daß an der Rückfläche der Liniaturen Leuchtdioden oder dergleichen angeordnet werden.

8. Verfahren nach Anspruch 3 oder 4, dadurch gekennzeichnet, daß die Liniaturen als das Werkstück nicht durchsetzende vertiefungen, wie Nuten oder dergleichen, eingebracht werden.

9. Verfahren nach Anspruch 8, dadurch gekennzeichnet, daß in das vorzugsweise schichtförmig aufgebrachte Werkstück eine die Tiefe der Vertiefungen begrenzende laserlichtreflektierende Schioht eingebettet wird.

10. Verfahren nach Anspruch 9, dadurch gekennzeichnet, daß als laserreflektierende Schicht eine Metallfolie, wie Aluminiumfolie, verwendet wird,

11. Verfahren nach einem der Ansprüche 3 bis 10, dadurch gekennzeichnet, daß die Liniaturen zur Erzeugung von Inkrustationen mittels eines von dem Werkstückmaterial verschiedenen Materials, ggf. farbig oder metallisch, ausgefüllt werden.

12. Verfahren nach Anspruch 11, dadurch gekennzeichnet, daß in den Liniaturen pilzförmig sich über die dem Betrachter zugewandte Vorderfläche des Werkstücks erhebende Ausstattungselemente verankert werden.

13. Verfahren nach einem der vorangehenden Ansprüche, dadurch gekennzeichnet, daß in das Werkstück nach dem Schnittvorgang wieder einsetzbare bewegliche Bedienungsfelder oder dergleichen eingeschnitten werden.

14. Holzwerkstück, hergestellt nach dem Verfahren nach einem der Vorangehenden Ansprüche.

# Fig.1

# Fig.2

# Fig.3

# EUROPÄISCHER RECHERCHENBERICHT

## EP 91 10 0104

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 139 409 (J.A.MACKEN ET AL.)<br>* das ganze Dokument *<br>- - - | 1-4,8-10, 14 | B 41 M 5/24<br>B 23 K 26/18<br>B 44 C 3/00<br>B 27 M 1/00 |
| X | DE-A-2 344 233 (NEWTON HORWOOD LTD.)<br>* Seite 7, letzter Absatz - Seite 11; Figuren 9, 10 *<br>- - - | 1-4,8-10, 13 | |
| A | DE-A-3 023 245 (SOCIáTá ROMANDE POUR L'IMPRáGNATION DES BOIS)<br>* das ganze Dokument *<br>- - - - - | 1,3-5 | |

|  |
|---|
| RECHERCHIERTE SACHGEBIETE (Int. Cl.5) |
| B 23 K<br>B 41 M<br>B 44 C<br>B 27 M |

Der vorliegende Recherchenbericht wurde für alle Patentansprüche erstellt

| Recherchenort | Abschlußdatum der Recherche | Prüfer |
|---|---|---|
| Den Haag | 25 April 91 | ARAN D.D. |